(19) Europäisches Patentamt
European Patent Office
Office européen des brevets

(11) Veröffentlichungsnummer: **0 111 100**
**B1**

(12) # EUROPÄISCHE PATENTSCHRIFT

(45) Veröffentlichungstag der Patentschrift: **22.08.90**

(51) Int. Cl.[5]: **B 29 C 33/64,** B 29 C 43/36

(21) Anmeldenummer: **83110146.4**

(22) Anmeldetag: **12.10.83**

(54) **Anwendung eines Trennmittelfilms bei der Vulkanisation von Gummiartikeln.**

(30) Priorität: **16.10.82 DE 3238429**
**12.04.83 DE 3313626**

(43) Veröffentlichungstag der Anmeldung:
**20.06.84 Patentblatt 84/25**

(45) Bekanntmachung des Hinweises auf die Patenterteilung:
**22.08.90 Patentblatt 90/34**

(84) Benannte Vertragsstaaten:
**AT BE CH DE FR GB IT LI LU NL SE**

(56) Entgegenhaltungen:
**DE-A-3 146 053**
**DE-B-1 286 246**
**GB-A-1 158 771**
**GB-A-1 220 381**
**US-A-3 905 823**

(73) Patentinhaber: **Grace Service Chemicals GmbH**
**Kurpfalzring 104**
**D-6900 Heidelberg 1 (DE)**

(72) Erfinder: **Wagner, Herbert**
**Östringer Strasse 7**
**D-7525 Bad Schönborn (DE)**
Erfinder: **Fischer, W., Dr.**
**Hellklingerstrasse 31**
**D-6942 Mörlenbach (DE)**
Erfinder: **Köhler, Winfried R.**
**Zedernstrasse 11**
**D-6805 Heddesheim (DE)**

(74) Vertreter: **UEXKÜLL & STOLBERG**
**Patentanwälte**
**Beselerstrasse 4**
**D-2000 Hamburg 52 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 111 100 B1

**Beschreibung**

Die Erfindung betrifft ein Verfahren zur Formung und Vulkanisation von Reifen und anderen Gummiartikeln, bei dem das Anbacken des geformten und vulkanisierten Rohlings and der Heizmembran der Vulkanisationspresse durch Verwendung eines vernetzten, ausgehärteten, fest haftenden, mit dem Untergrund durch chemische Wechselwirkungen verbundenen, elastischen Trennmittelfilms verhindert wird.

Nach dem Stand der Technik werden Reifen geformt und vulkanisiert, indem die Reifenrohlinge in eine Sprühkabine eingebracht werden, in der die Rohlinge mittels mechanischer Vorrichtungen in Rotation versetzt werden. In diese rotierenden Rohlinge wird eine Sprühpistole eingefahren, mit der eine Trennmittellösung in den Rohlingen verteilt wird. Der Overspray wird mittels Vakuum oder einer Wasserwand entfernt. Anschließend erfolgt die Formung und Vulkanisation des Röhlings in einer Vulkanisationspresse mittels einer Heizmembran (Blase, bladder), die die Aufgabe hat, den Reifenrohling zu beheizen, die Vulkanisation zu bewerkstelligen und den Reifen mit hohem Druck in Negativformen zu drücken (vgl. die Beschreibung dieser Arbeitsweise in DE—OS 32 46 053).

Die in den Vulkanisationspressen verwendeten Heizmenbranen (auch Heizbälge genannt) werden von Reinfabriken mit eigenen Mischungen nach eigenen Vorstellungen selbst hergestellt und verarbeitet. Sie bestehen aus verschiedenen Gummimischungen und haben an ihrer Außenseite Entlüftungskanäle, die dazu eingeprägt bzw. eingefräst sind, um Luft, die beim Bombieren der Membran eingeschlossen werden könnte, abzuleiten. Während der Vulkanisation unterliegen die Membranen hohem Druck und hohen Temperaturen (ca. 20 bar und bis 200°C). Sie werden dabei auf etwa das Doppelte gebehnt. Die Vulkanisationzeiten liegen bei Standardreifen für PKW bei 9 bis 15 Min. Die nätürliche Lebensdauer einer Heizmembran liegt unter diesen Belastungsverhältnissen je nach Beschaffenheit und je nach verwendetem Heizmaterial zwischen 300 und 600 Vulkanisationsheizungen.

Die Nachteile dieser bekannten Verfahrensweise zur Formung und Vulkanisation von Reifen und anderen Gummiartikeln bestehen insbesondere darin, daß das gleichmäßige Einbringen der Trennmittellösung in die Rohlinge, insbesondere im Bereich der Wulstzone arbeitsintensiv ist und oft mit Verschmutzungen von Geräten und Reifenflanken verbunden ist, was zusätzliche Arbeitsgänge notwendig macht. Die erwähnten Verschmutzungen kommen dadurch zustande, daß Trenmmittellösung auch auf die Greifarme für den Rohling gelangt und bei weiteren Arbeitstakten abtropft und dadurch den Rohling verschmutzt.

Die bei der beschriebenen Arbeitsweise verwendeten Trennlösungen enthalten vorzugsweise Silikone, insbesondere als Silikonöle bzw. Silikonemulsionen. Sowohl in Trennlösungen auf Lösungsmittelbasis als auch in wässrigen Trennlösungen bewirken die Silikone eine wesentliche Steigerung der Gleit- und Trenneigenschaften. Silikone haben allerdings auch bekannte Nachteile, die z.T. konzentrationsabhängig sind.

Um einen Teil der Nachteile der bekannten Verfahrensweise zu vermeiden, ist bereits in der DE-OS 31 46 053 vorgeschlagen worden, die Heizmembran mit einem in bestimmter Weise zusammengesetzten, Silikonöl enthaltenden Schmiermittel zu überziehen. Dieses Schmiermittel enthält ungefähr 10 bis 40 Gew. Teile Bentonit-Ton mit einer Teilchengröße zwischen ungefähr 100 und 500 mesh, ungefähr 15 bis 45 Gew. Teile Polydimethylsiloxan mit einer Viskosität von ungefähr 40000 bis 120000 $mm^2/s$ bei 25°C, ungefähr 12 bis 31 Gew. Teile Polyethylenglykol und/oder Polypropylenglykol mit einem Molekulargewicht zwischen ungefähr 1500 und 2500, ungefähr 10 bis 25 Gewichtsteile zwischen ungefähr 1500 und 2500, ungefähr 10 bis 25 Gewichtsteile eines oder mehrerer grenzflächenaktiver Mittel für die Polydimethylsiloxane und das Poly(alkylenglykol) und gegebenenfalls ungefähr 4 bis 12 Gewichtsteile eines Stabilisierungsmittels. Die expandierte Heizmembran wird mit diesem Schmiermittel in Form einer wässrigen Emulsion, die ungefähr 500 bis 1500 Gew. Teile Wasser enthält, überzogen. Dies geschieht beispielsweise durch Sprühbeschichtung und durch Trocknen, beispielsweise durch Abdampfen an der Luft bei einer Temperatur zwischen ungefähr 20 und 110°C. Die so mit einer Schmiermittelschicht überzogene Heizmembran kann für ungefähr 6 bis 9 Reifenvulkanisationszyklen verwendet werden. Danach tritt eine übermäßige Haftung zwischen der kontaktierenden äußeren Oberfläche der Heizmembran und der inneren Oberfläche des Reifens auf, d.h. nach der Formung und Vulkanisation des Reifens backt die Heizmembran am geformten und vulkanisierten Reifen fest, so daß die Trennung schwierig ist und möglicherweise zu Beschädigungen der Heizmembran und/oder des Reifens führt. Nach ungefähr 6 bis 9 Vulkanisationszyklen muß deshalb der Schmiermittelüberzug erneuert werden. Im Beispiel ist angegeben, daß die auf die Heizmembran aufgebrachte wässrige Emulsion eine Minute lang bei 65° getrocknet wurde. Der überzug mußte bereits nach 4 Reifenvulkanisationszyklen erneuert werden. Dabei dauerte ein Zyklus mehr als eine Stunde.

Wenngleich das in der DE—OS 32 46 053 vorgeschlagene Verfahren die Nachteile, die mit der Behandlung der Reifenrohlinge mit Trennmittellösung verbunden sind, vermeidet, hat es, abgesehen von anderen Nachteilen, den mindestens ebenso schweren Nachtile, daß der Schmiermittelüberzug bereits nach kurzer Zeit erneuert werden muß, so daß der Betrieb der Vulkanisationspresse häufig unterbrochen werden muß, was selbstverständlich zu unerwünschten Produktionsausfällen führt. Darüber hinaus ist eine derartig häufige Erneuerung des Schmiermittelüberzugs auf der Heizmembran wiederum mit einer starken Verschmutzung der Vulkanisationspresse verbunden, so daß das Verschmutzungsproblem eigentlich nur

verlagert ist. Dementsprechend hat sich dieses Verfahren in der Praxis nicht durchsetzen können.

Demgegenüber liegt der Erfindung die Aufgabe zugrunde, ein Verfahren zur Formung und Vulkanisation von Reifen und anderen Gummiartikeln vorzuschlagen, das nicht nur die oben genannten Nachteile des Standes der Technik, sondern auch die durch das Verfahren gemäß der DE—OS 32 46 053 nicht beseitigten oder durch dieses bedingten Nachteile vermeidet und außerdem unter Einsparung von Arbeitsgängen in einfacherer Weise durchführbar ist, indem die Heizmembran mit einer langlebigen und vorzugsweise einer Langzeitbeschichtung (Permanentbeschichtung) versehen werden soll, die bei guter Trennwirkung gleitfähig genug ist, um Fehler wie Lufteinschlüsse, Falten, Abdrücke und geklemmte Wulste zu vermeiden und eine Lebensdauer besitzt en soll, die der näturlichen Lebensdauer der Heizmembran entspricht.

Zur Lösung dieser Augfgabe wird ein Verfahren zur Formung und Vulkanisation von Reifen und anderen Gummiartikeln der in den Patentansprüchen gekennzeichneten Art vorgeschlagen.

Wenngleich das erfindungsgemäße Verfahren selbstverständlich auch auf andere Gummiartikel anwendbar ist, soll, die Erfindung im folgenden anhand der Formung und Vulkanisation von Reifen beschrieben werden.

Die Erfindung beruht auf dem Gedanken, die Oberfläche der Heizmembran so zu verändern, daß ein Anbacken des Reifens bei der Vulkanisation verhindert wird. Die Gleitfähigkeit des Trennmittelfilms muß so geartet sein, daß der Reifenrohling während der Bombage der Membran in die richtige Position rutscht bzw. dort bleibt, um eine einwandfreie Ausbildung des Reifens entsprechend der Negativform zu gewährleisten. Insbesondere für die Wulstzone ist die richtige Position des Rohlings in der Form von Bedeutung. Ferner muß ein auf die Heizmembran aufgebrachter Trennmittelfilm die oben beschriebenen Belastungen während der Vulkanisation und Formung eine längere Zeit aushalten können, ohne daß sich Oberfläche und Trennwirkung wesentlich verändern. Ebensowenig darf sich die Haftung des Trennmittelfilms auf der Oberfläche der Membran verringern bzw. eine Versprödung des Trennmittelfilms eintreten die zum Abrubbeln führen könnte.

Trennmittelfilme, die diesen Anforderungen genügen, mussen eine gute Gleit- und Trennwirkung aufweisen und fest auf der Oberfläche der Heizmembran haften. Dementsprechend genügt es nicht, wie in der DE —OS 31 46 053 vorgeschlagen, die Heizmembran nur mit einer in Form eines Gemeges vorliegenden Schmiermittelschicht zu überziehen, da diese bereits nach wenigen Riefenvulkanisationszyklen beschädigt oder ganz oder teilweise von der Heizmembranoberfläche abgetragen ist. Vielmehr ist es erforderlich, daß der Trennmittelfilm auf einer in sich geschlossenen Verbindung basiert, die mit dem Untergrund durch chemische Wechselwirkungen verbunden ist, so daß der Trennmittelfilm fest auf der Heizmembran verankert ist. Hinzukommt, daß der Trennmittelfilm in sich elastisch sein muß. Mit anderen Worten muß es sich bei dem erfindungsgemäßen Trennmittelfilm um eine Trennschicht handeln, die die unerwünschte Wechselwirkung zwischen der Oberfläche des Reifenrohlings und der Oberfläche der Heizmembrans als inerte, langlebige und vorzugsweise permanent vorhandene Zwischenschicht ausschaltet.

Trennmittelfilme mit den genannten Eigenschaften kann man beispielsweise auf Basis von Silikonverbindungen (Silikonkautschuken) herstellen, die unter Einfluß von Feuchtigkeit (vorzugsweise feuchter Luft) und/oder Wärme polymerisieren und dabei dreidimensional vernetzte Polymere bilden. Derartige Silikonverbindungen, die im wesentlichen Einheiten der allgemeinen Formel

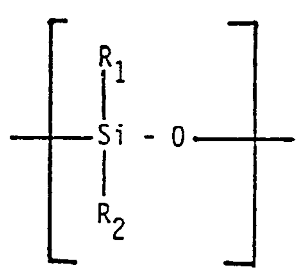

in der $R_1$ und $R_2$ gleich oder verschieden sind und Alkylreste wie Methyl- oder Ethylreste und/oder Arylreste wie Phenylreste bedeuten, enthalten, sind aus dem Stand der Technik bekannt (siehe beispielsweise DE—PS 1 286 246, auf die hiermit Bezug genommen wird) und im Handel erhältlich. Für die Zwecke der Erfindung eignen sich insbesondere im Handel erhältliche Mischungen von Polydimethylsiloxanen, wobei die unter Einfluß von Feuchtigkeit härtenden Silikonverbindungen aufgrund der stärkeren Vernetzung bevorzugt sind. Gebräuchliche feuchtigkeitshärtende Systeme sind beispielsweise die Essigsäure- und Aminsysteme, bei denen unter Einfluß von Feuchtigkeit Essigsäure oder Amine durch hydrolytische Spaltung unter gleichzeitiger Ausbildung reaktiver, die Vernetzung bewirkender Si-OH-Gruppen freigesetzt werden (siehe wiederum beispielshaft DE—PS 1 286 246, insbesondere Spalte 1 unten). Dieser Reaktionsverlauf kann durch das folgende Reaktionsschema beispielhaft wiedrgegeben werden (Essigsäuresystem):

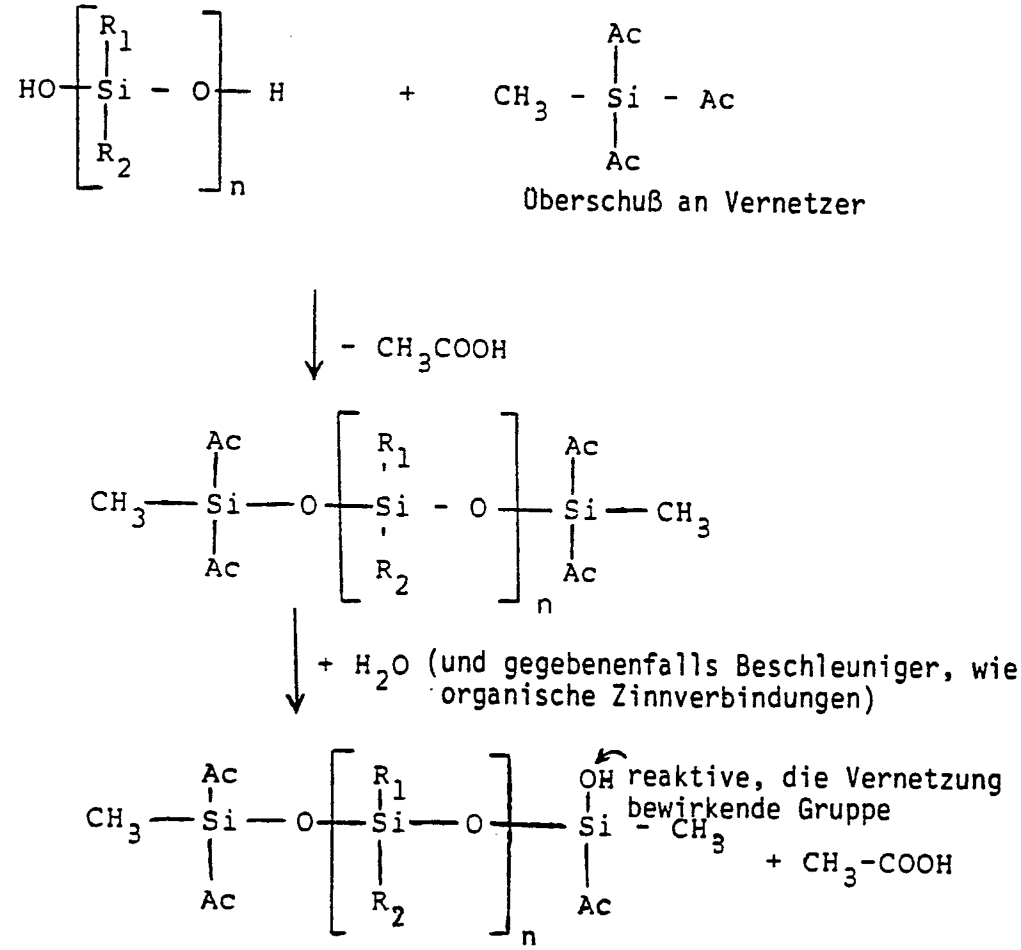


n ist eine Zahl in der Größenordnung von 500—2000; Ac bedeutet —O—CO-$CH_3$

Die gemäß dem obigen Reaktionsschema gebildeten reaktiven OH-Gruppen reagieren unter Freisetzung weiterer Essigsäure mit noch an Siliciumatome gebundenen Acetylgruppen und bewirken dadurch die dreidimensionale Vernetzung. Gleichzeitig wird unter dem fortdauernden Einfluß von Feuchtigkeit durch hydrolytische Spaltung weitere Essigsäure freigesetzt, so daß die Vernetzung fortschreitet.

Demgegenüber enthalten wärmehärtende Systeme in der Regel endständige Substituenten mit ungesättigten Kohlenstoff-Kohlenstoff-Doppelbindungen, die in Gegenwart eines Katalysators (z.B. t.-Butylperoxid) und erhöhten Temperaturen zur Polymerisation führen, wobei allerdings im Vergleich zu feuchtigkeitshärtenden Systemem meistens mehr lineare, also weniger stark vernetzte Polymere erhalten werden.

Un dem Trennmittelfilm die erforderliche Trennwirkung zu vermitteln, werden die beschriebenen unter Einflüß von Feuchtigkeit und/oder Wärme härtenden Silikonverbindungen (Silikonkautschuke) zusammen mit Silikontrennmitteln verwendet. Auch diese sind aus dem Stand der Technik bekannt und in Handel erhältlich. Hierbei handelt es sich um Silikonverbindungen, deren Struktur im wesentlichen der Forme!

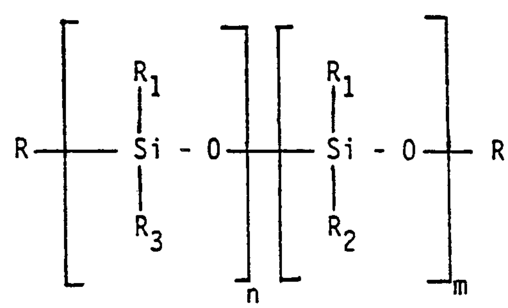

entspricht, in der $R_1$ und $R_2$ gleich oder verschieden sind und Alkylreste wie Methyl- oder Ethylreste und/ oder Arylreste wir Phenylreste bedeuten, während es sich bei $R_3$ um längere Seitenketten mit OH— oder Aminfunktion handelt. Diese längeren Seitenketten verringern die Hydrophobie der Trennmittel und verbessern ihre Benetzbarkeit, ihr Haftvermögen und ihre Filmbildungseigenschaften. R ist in der Regel ebenfalls ein Alkyl- oder Arylrest entsprechend $R_1$ und $R_2$. Die Summe von n und m liegt gewöhnlich in der Größenordnung von 50 bis 1200. Für die erfindungsgemäßen Zwecke haben sich beispielsweise der obigen Formel entsprechende Polydimethylsiloxane mit die Hydrophobie vermindernden Seitenketten ($R_3$) als geeignet erwiesen.

Die Mischungen der genannten Silikonverbindungen (Silikonkautschuk) und Silikontrennmittel), die bereits abgemischt im Handel erhältlich sind, werden vorzugsweise in Form einer Lösung in organischen Lösungsmitteln auf die Heizmembran aufgebracht. Frische, noch nicht eingebaute Membranen werden zuvor oberflächlich gründlich mit Lösungsmitteln gereinigt. Die Aufbringung der Lösung der Silikonverbindung erfolgt durch Tauchen, Aufsprühen, Aufpinseln oder Aufwischen. Anschließend wird die so behandelte Membran Feuchtigkeit enthaltender Luft und zur Beschleunigung der Reaktion ggf. erhöhten Temperaturen ausgesetzt. Bei Verwendung von wärmehärtbaren Silikonverbindungen genügt die Anwendung ausreichend hoher Temperaturen. In jedem Fall entsteht dabei ein vernetzter Trennmittelfilm, der sich durch chemische Wechselwirkung fest mit der Oberfläche der Membran verbindet. Der Einbau einer solcherart veränderten Membran in die Vulkanisationspresse erfolgt in gewohnter Art. Da die Oberfläche des ausreagierten Trennmittelfilms hochglänzend ist, so daß auch Innere eines vulkanisierten Reifens glänzend wird, was nicht unbedingt von Vorteil ist, kann man durch Zusatz anorganischer Füllstoffe die Oberflächenstruktur des Films so verändern, daß sie matt wird. Weiterhin wird durch die so erreichte leichte Aufrauhung der Oberfläche die Entlüftung während der Bombage gefördert, so daß die Enstehung von Lufteinschlüssen insbesondere im Bereich der Innerliner-Zusammensetzung reduziert wird. Geeignete Füllstoffe, die sich in die Lösung der Silikonverbindung stabil einbauen lassen, sind beispielsweise Kaolin, Kreide, Steinmehl, Kieselsäuren, Ruß und Graphit. Besonders bevorzugte Füllstoffe sind hydrophobierte Kieselsäuren. Die Teilchengröße des Füllstoffs liegt gewöhnlich im Bereich von 1 bis 200 µm. Die erforderliche Füllstoffmenge richtet sich im wesentlichen nach dem Ausmaß der gewünschten Mattierung und der Beschaffenheit der zu beschichtenden Heizmembran, d.h. der für eine ausreichende Luftableitung erforderlichen Rauhigkeit. So kann bei alten, bereits stark aufgerauhten Heizmembranen ggf. auf die Verwendung eines Füllstoffes verzichtet werden, da die Oberflächenbeschaffenheit der Heizmembran und damit auch die Oberflächenbeschaffenheit des aufgebrachten Trennmittelfilms bereits für eine ausreichende Entlüftung sorgt. Grundsätzlich ist anzustreben, den Füllstoffanteil möglichst gering zu halten, da der Zusatz von Füllstoff fast immer mit einem Feuchtigkeitseintrag verbunden ist, was zu einer vorzeitigen Reaktion der feuchtigkeitshärtenden Silikonverbindungen führen und dadurch die Handhabbarkeit und Brauchbarkeit der Lösungen der Silikonverbindungen mehr oder weniger stark beeinträchtigen bzw. die Lösungen der Silikonverbindungen unbrauchbar machen kann.

Die zur Herstellung des Trennmittelfilms auf der Heizmembran zu verwendende Lösung enthält im allgemeinen 2 bis 50 Gew.% Silikonverbindung Sililonkautschuk plus Silikontrennmittel), 30 bis 98 Gew.%) organisches Lösungsmittel und 0 bis 20 Gew.% Fullstoff. Dabei bestimmt sich die Auswahl der Silikonverbindungen im wesentlichen nach den an die Heizmembran gestellten Anforderungen. So bedarf eine Heizmembran, die in einer Vulkanisationspresse zur Herstellung von Autoreifen verwendet wird, eines elastichen Trennmittelfilms, der sich allen Formveränderungen der Heizmembran ohne Beschädigung anpaßt. Vorzugsweise werden in diesen Fällen Lösungen zur Herstellung des Trennmittelfilms auf der Heizmembran verwendet, die 2 bis 30 Gew.% und vorzugsweise 12 bis 18 Gew.% Silikonverbindungen, 50 bis 98 Gew.% und vorzugsweise 60 bis 80 Gew.% organisches Lösungsmittel und 0 bis 20 Gew.% und vorzugsweise 1 bis 10 Gew.% Füllstoff enthalten (vgl. Beispiel 1).

Es hat sich gezeigt, daß man die Eigenschaften des Trennmittelfilms dadurch verbessern kann, daß man den Trennmittelfilm durch Aufbringung einer Gleitmitteldeckschicht modifiziert. Hierfür eignen sich die bekannten aufziehenden Silikonharze, die Füllstoffe (siehe oben) enthalten können. Als für die erfindungsgemäßen Zwecke geeignet haben sich insbesondere Silikonharze wie Dimethylpolysiloxan mit OH-Gruppen und katalytischer Vernetzung erwiesen. Zur Aufbringung werden Lösungen verwendet, die 10 bis 50 Gew.% Silikonharz, 30 bis 90 Gew.% organische Lösungsmittel und 0 bis 20 Gew.% Füllstoff enthalten (vgl. Beispiel 2). Bei weniger stark beanspruchten Heizmembranen, beispielsweise zur Herstellung von Fahrrad- und Motorradreifen, ist es sogar möglich, nur einen verhältnismaßig dünnen Trennmittelfilm der oben beschriebenen Art als Primer auf die Heizmembran aufzubringen und diesen dann mit einer Deckschicht auf Basis eines aufziehenden Silikonharzes zu versehen, wobei die Deckschicht den größeren Teil des fertigen Trennmittelfilms ausmacht., Diese Verfahrensweise führt zwar zu mehr lackartigen und weniger elastischen Trennmittelfilmen, ergibt jedoch bei den genannten Anwendungsfällen ebenfalls befriedigende Ergebnisse (siehe wiederum Beispiel 2).

Alternativ zu der beschriebenen Deckschicht aus Basis eines aufziehenden Silikonharzes kann die Deckschicht aus dem gleichen Material wie die darunterliegende Schicht bestehen mit dem Unterschied, daß sie zusätzlich Gleitmittel enthält, oder das Gleitmittel kann unter Verzicht auf eine Deckschicht unmittelbar in dem Trennmittelfilm enthalten sein. Geeignete Gleitmittel, die dem Fachmann grundsätzlich bekannt sind, sind u.a. Silikonharze wie Dimethylpolysiloxan mit OH-Gruppen und katalytischer Vernetzung, Silikonöle, Silikonkautschuk in Verbindung mit Silikonharz und Waschen oder zusätzlich

Teflonpulver, Teflondispersionen oder teflonisierten Wachsen oder mit Gleitstoffen auf mineralischer Basis, auch Graphite und Ruße, oder mit Acryldispersionen oder mit inneren Gleitmitteln oder mit Polyethylen- oder Polypropylendispersionen und Wachsen.

Als besonders geeignete organische Lösungsmittel haben sich erfindungsgemäß Benzin, und halogenierte Kohlenwasserstoffe, insbesondere Frigene erwiesen, wobei Frigen vom Typ 113 ($CClF_2$—$CCl_2F$) besonders bevorzugt ist. Selbstverständlich können aber auch andere organische Lösungsmittel erfolgreich eingesetzt werden, wobei sich die Auswahl nach den gewählten Silikonverbindungen, nach den Bedingungen der Verarbeitung und Lagerung sowie dem jeweiligen Sicherheitsvorschriften richtet.

Die Schichtdicke des Trennmittelfilms ist ebenfalls eine variable Größe, die von Fall zu Fall den Erfordernissen anzupassen ist. Die Schichtdicke des Trennmittelfilms beträgt im allgemeinen 5 bis 100 µm und vorzugsweise 20 bis 60 µm (beispielsweise 40 µm). Nach dem erfindungsgemäßen Verfahren durchgeführte Versuche haben gezeigt, daß relativ dünne Filme insgesamt bessere Eigenschaften haben. Für die Entlüfung und Hinterlüftung haben sich relativ dünne Membranen mit kreuzgefrästen Entlüftungsrillen am besten bewährt. Vorzugsweise ähnelt die Rillung der Membran einem Fischgrätenmuster, wobei Doppel- und Dreifach-Fischgrätenmuster unter Ausbildung von Fünfeckstrukturen besonders bevorzugt sind.

Die Ausbesserung eines nicht mehr ausreichend trennenden Trennmittelfilms geschieht in der Vulkanisationspresse, wobei die Membran Temperaturen von 100 bis 150°C aufweist. Durch diese hohen Temperaturen wird die Vernetzungsreaktion der Silikonverbindung beschleunigt, so daß nach etwa 10 bis 30 Min. Reaktionszeit weitergearbeitet werden kann. Die erforderliche Zeit hängt selbstverständlich von der Schichtdicke des aufgebrachren Trennmittelfilms ab und muß von Fall zu Fall den gegebenen Bedingungen angepaßt werden. Auf eine andere Möglichkeit der Ausbesserung des erfindungsgemäßen Trennmittelfilms wird noch weiter unten eingegangen.

Mit der oben beschriebenen Arbeitsweise können in der Praxis bei der Herstellung von Autoreifen (Radialreifen) etwa 30 bis 75 Heizungen und mehr und bei der Herstellung von Fahrrad- und Motorradreifen bis zu etwa 200 Heizungen durchgeführt werden. Danach ist eine Nachbeschichtung erforderlich, die trotz des gegenüber dem Stande der Technik großen Fortschritts natürlich immer noch zu Zeitverlusten und damit zu Produktionsausfällen führt. Ferner hat das Nachbeschichten in der Presse den Nachteil, daß einerseits eine Verschmutzung der Reifenformen und von Teilen der Presse nicht zu vermeiden ist und andererseits nicht immer alle nachzubeschichtenden Bereiche ausreichend erfaßt werden. Ersteres gilt insbesondere für das Nachbeschichten durch Einsprühen, letzteres insbesondere für das Nachbeschichten durch Streichen.

In einer bevorzugten Ausführungsform der Erfindung wird deshalb so vorgegangen, daß man den Trennmittelfilm auf der Heizmembran herstellt, indem man nacheinander mehrere dünne Schichten aufbringt. Ferner können zur Verbesserung der Gleitwirkung in eine oder mehrere der dünnen Schichten Gleitmittel eingearbeitet und/oder als Deckschicht eine Gleitmittelschicht aufgebracht werden. Außerdem hat es sich manchmal als vorteilhaft erwiesen, zusätzlich eine reine Trennmittelschicht als Zwischenschicht aufzubringen. Auf Füllstoffe kann in der Regel verzichtet werden.

Wie bereits erwähnt, liegt natürliche Lebensdauer einer Heizmembran je nach Beschaffenheit und je nach verwendetem Heizmaterial zwischen 300 und 600 Vulkanisationsheizungen. Ein Trennmittelfilm, der eine Langzeitbeschichtung (Permanentbeschichtung; darstellt, muß also mindestens diese 300 bis 600 Heizungen aushalten, ohne daß die Membran zwischendurch neu beschichtet wird und ohne daß die Reifenrohlinge mit einem Trennmittel versehen zu werden brauchen. Erforderlich ist also ein Trennmittelfilm, der bei Vulkanisationsbedingungen eine hervorragende Haftung auf dem Grundmaterial der Heizmembran hat und die notwendige Trenn- und Gleitwirkung besitzt, um die 300 bis 600 (je nach Art der Membran und der Presse) Reifen bei guter Qualität zu vulkanisieren.

Durch die genannten Maßnahmen bei der bevorzugten Ausführungsform der Erfindung, d.h. die Herstellung des Trennmittelfilms durch Aufbringung mehrerer dünner Schichten und die Verbesserung der Gleitwirkung durch Aufbringung einer Gleitmittelschicht oder Einarbeitung von Gleitmitteln in eine oder mehrere der dünnen Schichten, gelingt es, eine Permanentbeschichtung herzustellen, deren Lebensdauer mindestens der der Heizmembran entspricht. Darüber hinaus wurde in einer weiteren bevorzugten Ausführungsform der Erfindung festgestellt, daß man die natürliche Lebensdauer der Heizmembran verlängern kann, wenn man auch die Innenseite der Heizmembran mit einem Trennmittelfilm versieht. Diese Innenbeschichtung führt offensichtlich dazu, daß die Innenauswaschung und Versprödung des Heizmembranmaterials (meistens Butylkautschuk) verzögert wird. Darüber hinaus wird angenommen, daß die Außen- und Innenbeschichtung der Heizmembran zu einer Verringerung der Schwefeldiffusion führt. Insgesamt wird die natürliche Lebensdauer der Heizmembran durch das erfindungsgemäße Verfahren um etwa 20% oder mehr verlängert. Die Innenbeschichtung der Heizmembran bietet selbstverständlich auch bei der oben zuerst beschriebenen Ausführungsform der Erfindung Vorteile.

Erfindungsgemäß wird so vorgegangen, daß die Heizmembran zunächt innen und außen gründlich mit Lösungsmitteln gereinigt wird. Die Reinigung ist wichtig, um die Membran von Schmutz- und Silikonrückständen zu befreien. Außerdem gelingt es bei geeigneter Wahl der Lösungsmittel, die Oberfläche der Heizmembran anzuquellen, was zu einem bessern Haftverbund der nachfolgenden Grundierung führt.

Unmittelbar nach der Reinigung erfolgt die Aufbringung der ersten dünnen Schicht der herzustellenden Trennmittelfilms. Hierzu wird eine verdünnte Lösung der Silikonverbindungen durch Tauchen, Aufsprühen, Aufpinseln oder Aufwischen auf getragen. Die Beschichtung soll bei Raumtemperatur je nach Luftfeuchtigkeit eine Aushärtzeit von etwa 0,5 bis 24 Std., vorzugsweise 4 bis 12 Std. haben. Nach erfolgter Aushärtung wird in der gleichen Weise die nächste sehr dünne Schicht aufgebracht. Diese wird wiederum ausgehärtet und dann erfolgt die Aufbringung weiterer Schichten in der beschriebenen Weise, bis die gewünschte Gesamtschichtstärke erreicht ist. Es ist wichtig, verdünnte Lösungen des Trennmittels zu verwenden, um nach der Verdunstung des Lösungsmittels sehr dünne Schichten zu erhalten. Die Schichtstärke pro Schicht soll zwischen 1 und 20 µm und vorzugsweise 1 und 5 µm betragen. Üblicherweise werden 2 bis 10 Schichten und vorzugsweise 3 bis 6 Schichten aufgetragen, so daß die Gesamtschichtstärke 2 bis 50 µm und vorzugsweise 5 bis 30 µm beträgt. Bei der entsprechenden Innenbeschichtung sind verständlicherweise weniger Beschichtungen und eine geringere Gesamtschichtstärke erforderlich. Als geeignet haben sich eine bis 5 Schichten in einer Gesamtschichtstärke von 1 bis 30 µm und vorzugsweise 2 bis 10 µm erwiesen.

Für die Herstellung der dünnen Schichten des Trennmittelfilms eignen sich insbesondere die oben beschriebenen Silikonkautschuke, die unter Einfluß von Feuchtigkeit (vorzugsweise feuchter Luft) unter Vernetzung polymerisieren. Bevorzugt werden diese in Form von im Handel erhältlichen Mischungen mit Silikontrennmitteln (siehe oben) verwendet. Es können aber auch die ebenfalls oben beschriebenen 2-Komponenten-materialien verwendet werden, d.h. Materialien, die eine zusätzliche Härterkomponente (Peroxid usw.) aufweisen. In Abweichung von den für Autoreifen in Zusammenhang mit der zuerst beschriebenen Ausführungsform der Erfindung als geeignet beschriebenen Trennmittellösungen (s. insbesondere Beispiel 1) ist es bei der bevorzugten Ausführungsform der Erfindung, wie oben bereits erwähnt, erforderlich, stärker verdünnte Lösungen einzusetzen. Es hat sich gezeigt, daß gute Ergebnisse mit den oben beschriebenen Lösungen erzielt werden, wenn, bezogen auf das Volumen, eine zusätzlich Verdünnung mit organischen Lösungsmitteln im Verhältnis 1:1 bis 1:3 erfolgt.

Zur Erhöhung der Gleitwirkung des Trennmittelfilms kann wie angegeben als Deckschicht eine Gleitmittelschicht verwendet werden. Um die angestrebte Gleitwirkung auch bei Abnutzung der oberen Schichten des Trennmittelfilms zu gewährleisten, kann es darüber hinaus von Vorteil sein, auch einer oder mehreren der unteren Schichten ein Gleitmittel zuzusetzen. Außerdem ist es manchmal von Vorteil, eine reine Trennmittelschicht als Zwischenschicht zwischen den Trennmittelschichten einzubringen. Dies geschieht durch Aufbringung einer wässrigen Emulsion des Silikontrennmittels auf die beschichtete Heizmembran und anschließendes Verdunsten bzw. Verdampfen des Wassers. Bei extrem dicken Trennmittelfilmen kann man auch so vorgehen, daß man abwechselnd eine reine Trennmittelschicht und eine Schicht aus einer Mischung aus Silikonkautschuk und Silikontrennmittel aufträgt. Hinsichtlich der geeigneten Gleitmittel und Gleitmittelschichten sei auf die obigen Ausführungen verwiesen.

Wenngleich es sich zumindest bei dem gemäß der bevorzugten Ausführungsform der Erfindung verwendeten Trennmittelfilms um eine Permanentbeschichtung der Heizmembran handelt, d.h. im Normalfall eine Ausbesserung bzw. Nachbeschichtung nicht erforderlich ist, kann man eine Nachbeschichtung ohne Schwierigkeiten leicht durchführen. Dies geschieht erfindungsgemäß entweder wie ober beschrieben oder in der Weise, daß man einen Reifenrohling innen durch Streichen oder Sprühen mit der zur Herstellung des Trennmittelfilms verwendeten Lösung beschichtet, wobei man vorzugsweise jedoch eine geringere Verdünnung wählt, um genügend Material aufbringen zu können. Dieser Reifenrohling wird dann ganz normal in der Presse behandelt, wobei das Trennmittel von dem Rohling auf die Heizmembran übertragen und auf dieser eingebrannt wird. Nach dem Heizvorgang ist die Membran für weitere 40 bis 70 Vulkanisationsheizungen beschichtet und der vulkanisierte Reifen ist voll verwendungsfähig. Es tritt also keine Unterbrechung der Produktion ein, und außerdem wird eine Verschmutzung der Presse und der Reifenformen vermieden.

Es ist auch möglich, die Übertragungsbeschichtung mittels eines bereits vulkanisierten Werkzeugreifens durchzuführen. Dabei wird die Heizmembran in den Werkzeugreifen gebracht und angeheizt, ohne daß die Presse geschlossen wird. Auf diese Weise die Trennmittelschicht von dem Werkzeugreifen auf die Membran übertragen. Besonders vorteilhaft ist es, wenn man für die beschriebenen Übertragungsbeschichtung ein verzögertes Material einsetzt, d.h. beispielsweise dem in Beispiel 1 verwendeten Material etwas von dem im Beispiel 2 für die Deckschicht verwendeten Material zusetzt. Hierdurch wird gleichzeitig auch die Gleitwirkung der Nachbeschichtung verbessert, Häufig noch bessere Ergebnisse erzielt man bei Verwendung von temperaturbeschleunigtem Material, d.h. dem Material wird ein Beschleuniger zugesetzt, der bei erhöhten Temperaturen wirksam wird. Auf diese Weise können Reifenrohlinge oder Werkzeugreifen auf Vorrat beschichtet und im Bedarfsfall verwendet werden, da die Aushärtung erst bei Vulkanisationstemperaturen eintritt.

Die obige Beschreibung der Erfindung macht deutlich, daß sich das erfindungsgemäße Verfahren grundsätzlich von dem in der DE—OS 31 46 053 vorgeschlagenen Verfahren unterscheidet. Gemäß der DE—OS 31 46 053 wird nämlich ein Schmiermittel in Form einer Emulsion auf die Heizmembran aufgebracht, das ein Gemenge verschiedener Rohstoffe mit beschränkter Schmier- und Trennwirkung darstellt. Dieses Schmiermittel geht keine chemischen Wechselwirkungen mit der Oberfläche der Heizmembran ein und dient nach rein physikalischen Gesetzmäßigkeiten hauptsächlich zur Verminderung der Reibungskräfte. Demgegenüber basiert der erfindungsgemäße Trennmittelfilm chemisch gesehen auf

einer in sich geschlossenen, vernetzten Verbindung, die über chemische Wechselwirkungen mit der Oberfläche der Heizmembran fest verbunden ist. Während der Schmiermittelüberzug gemäß DE—OS 31 46 053 nicht elastich ist, so daß es erforderlich ist, die Heizmembran bei Aufbringung des Überzugs zu expandieren, was ein Arbeiten in der Vulkanisationspresse erfordelich macht, ist der erfinderungsgemäße Trennmittelfilm elastisch, so daß ein Expandieren der Heizmembran bei der Beschichtung nicht erforderlich ist und somit die Heizmembranen außerhalb der Presse, ohne diese für die Producktion zu blockieren, auf Vorrat beschichtet werden können. In diesem Zusammehang sei erwähnt, daß die erfindungsgemäßen Trennmittelfilme einem Elastizitätsmodul in der Größenordnung von 0,1 bis 0,3 N/$mm^2$ und eine Shore A Härte in der Größenordnung von 10 bis 40 besitzen. Der große Unterschied zwischen dem Schmiermittel gemäß DE—OS 31 46 053 und dem Trennmittelfilm gemäß der vorliegenden Erfindung offenbart sich insbesondere in der Effektivität. Während ein Schmiermittel sich sehr schnell bein Vulkanisationsprozeß durch mechanische Verschiebung, aber auch durch ungehemmte Wechselwirkung und Diffusion seiner Komponenten in der Grenzschicht Heizmembran/Reifenrohling abbaut, hat der als chemische Verbindung anzusehende erfindungsgemäß Trennmittelfilm eine wesentlich längere Lebensdauer. Während gemäß der DE—OS 31 46 053 6 bis 9 Heizungen moglich sind, konnen erfindungsgemäß, insbesondere bei der bevorzugten Ausführungsform der Erfindungs bis zu 700 Heizungen erreicht werden, d.h. der erfindungsgemäße Trennmittelfilm hat zumindest die gleiche Lebensdauer wie die Heizmembran. Auch das allgemein bekannte Problem der Entlüftung wird erfindungsgemäß auf ganz andere Art als gemäß der DE—OS 31 46 053 gelöst. Während gemäß der DE—OS 31 46 053 Pigmente wie Bentonitton als Abstandshalter zwischen Heizmembran und Reifenrohling verwendet werden, wird die Entlüftung erfindungsgemäß durch Mikroporosität in der Deckschicht der Permanentbeschichtung bewirkt. Wenn erfindungsgemäß auch Rohstoffe mit Gleitfunktion in den Trennmittelfilm eingearbeitet werden, so dienen diese der Verminderung der Reibungskräfte in der Grenzschicht zwischen Reifenrohling und Trennmittelfilm, um letzteren vor dem Zerreißen zu schützen.

Für den Fachmann ist es klar, daß das beschriebene Verfahren im Rahmen der Erfindung in vielfältiger Weise vasriiert werden kann. So kann der Trennmittelfilm auch auf anderen Polymeren als Silikonkautschuk basieren, vorausgesetzt sie haften ausreichend gut auf der Heizmembran (möglicherweise durch Mitverwendung eines Halfvermittlers) und sich gegenüber den hohen Belastungen in der Vulkanisationspresse ausreichend stabil, um die Dauerhaftigkeit des Trennmittelfilms zu gerantieren. Darüber hinaus kann das im Basispolymer des Trennmittelfilms enthaltene Trennmittel gegen andere Trennmittel ausgetauscht werden, wobei auf ein Trennmittel sogar ganz verzichtet werden kann, wenn das Basispolymer als solches bereits eine ausreichende Trennwirkung besitzt. Entsprechendes gilt für das Gleitmittel.

Im folgenden sill die Erfindung anhand von Beispielen erläutert werden.

### Beispiel 1

In einer Reifenfabrik wurden Heizmembranen von Vulkanisationspressen durch Aufsprühen bzw. Auftrag mit dem Pinsel mit einer benzinösen Trennmittellösung beschichtet, die eine in Handel erhäktliche Mischung aus feuchtigkeitshärtendem Silikonkautschuk und Polydimethylsiloxanen mit die Hydrophobie vermindernden Seitenketten (siehe oben) in einer Menge von 17 Gew. sowie 10 Gew.% Steinmehl als Füllstoff enthielt. Anschließend wurde die Membran 24 Stunden lang an der Luft gelagert und daraufhin wie üblich in die Vulkanisationspresse eingebaut. Mit diesen Membranen konnten jeweils zwischen 40 und 75 Heizungen durchgeführt werrden, bevor der Trennmittelfilm erneuert werden mußte. Bei normalem Arbeitstakt werden pro Presse 30 bis 35 Reifen pro Schicht vulkanisiert. Geladen wurden die Pressen mit Reifenrohlingen ohne jegliche Behandlung zwischen dem Rifenaufbau und der Vulkanisation. Die Versuche ergaben, daß es möglich und vorteilhaft ist, jeweils zu Schichtbeginn die Membranen einer Pressenstraße zu beschichten, un dann ungestört während der Schicht arbeiten zu können, Dabei ist selbstverständlich der Erneuerungstakt den jeweiligen Umständen anzupassen.

Die so gefertigten Reifen wurden anschließend kritischen Prüfungen und Laufprüfungen unterzogen, wobei sehr positive Ergebnisse erreicht wurden.

### Beispiel 2

Die Heizmenbranen einer Vulkanisationspresse für Fahrrad- und Motorradreifen wurden durch Aufpinseln mit einem Primer versehen. Bei dem Primer handelte sich sich um die Trennmittellösung gemäß Beispiel 1 mit dem Unterschied, daß diese Lösung nur 3 Gew.% der Mischung aus feuchitigkeitshartendem Silikonkautschuk und Polydimethylsiloxanen und keinen Füllstoff entheilt. Nach Aushärtzung des Primers wurden die Heizmembranen mit einer benzinösen Trennmittellösung behandelt, die 35 Gew.% Silikoharz und 2 Gew.% Siliciumdioxid als Fullstoff enthielt. Bei dem Silikonharz handelte es sich um Dimethylpolysiloxan mit etwa 1% OH-Gruppen, wobei die katalysatische Vernetzung (Polykondensation) mit Hilfe eines Katalysators erfolgte, der durch das Lösungsmittel inihibiert war und erst nach Verdunsten des Lösungsmittels wirksam wurde. Die Reaktion fand innerhalb von 24 Stunden bei Raumtemperatur statt. Durch Temperaturehöhung auf etwa 150°C konnte die Reaktionszeit auf etwa 10 Minuten verringert werden. Mit diesen Membranen konnten bis zu 200 Vulkanisationen bei Drucken von etwa 15 bar und Temperaturen von etwa 200°C durchgeführt werden.

Bei den in den Beispielen 1 und 2 beschreibenen Versuchen wurden neue Membranen vor dem

Aufbringen des Trennmittelfilms am besten mechanisch aufgerauht, um eine bessere Haftung und Entlüftung zu gewährleisten. Die Wiederaffrischung des Trennmittelfilms geschah in der Presse, wobei hier in jedem Fall im Wischverfahren gearbeitet wurde. Nach 10 bis 30 Minuten Reaktionszeit bei etwa 150°C konnte weitergearbeitet werden.

Beispiel 3

In einer Reifenfabrik wurden 4 Heizbälge innen und außen mit Specialbenzin (100—140°C Siedebereich) mit Lappen gründlich gereinigt. Die gereinigten Heizbälge wurden mit einer Trennmittellösung beschichtet. Als Trennmittellösung diente eine Lösung, die eine im Handel erhältliche Mischung aus einem feuchtigkeitshärtenden Silikonautschuk und Polydimethylsiloxanen mit die Hydrophobie vermindernden Seitenketten (siehe oben) in einer Menge von 17 Gew.% enthielt und im übrigen aus Frigen 113 und Benzin bestand. Diese Trennmittellösung wurde nochmals im Verhältnis 1:1 (Volumen/Volumen) mit Spezialbenzin (100—140°C Siedebereich) verdünnt. Die Grundierung erfolgte durch Einstreichen mit dem Pinsel. Anschließend wurde bei Raumtemperatur 0,5 bis 1 Stunde lang ausgehärtet. Dann wurden in der geschilderten Art und Weise weitere Schichten aufgebracht. Ingesamt wurden die Bälge innen mit 2 Schichten und außen mit 4 Schichten versehen. Dabei erwies es sich als fünstig, die Bälge nach der zweiten Beschichtung zusätzlich über Nacht aushärten zu lassen und die weiteren Schichten erst am nächsten Tag aufzubringen.

Nachdem die Bälge außen mit 4 Schichten versehen waren und dieselben gut ausgehärtet waren, wurde eine Deckschicht durch Einstreichen mit dem Pinsel aufgebracht. Hiefür wurde eine Lösung von Silikonharz (Dimethylpolysiloxan mit % OH-Gruppen mit katalytischen Vernetzer wie in Beispiel 2) in einem organischen Lösungsmittel verwendet. Der Feststoffgehalt betrug 34%. Die Deckschicht war nach 2 bis 3 Stunden handtrocken, härtete aber erst nach 24 Stunden aus. Durch Erhöhung der Temperature auf 130 bis 150°C konnte die Aushärtung der Deckschicht auf etwa 5 bis 10 Minuten verküzt werden. In diesem Zusammenhang hat sich gezeigt, daß es vorteilhaft ist, nach Auftrag der Deckschicht bis etwa 15 Minuten bei bis etwa 150°C zu tempern.

Die Heizbälge besaßen nach dieser Behandlung also innen 2 Schichten und außen 4 Schichten plus eine Deckschicht. Die Gesamtschichtstärke der Innenbeschichtung lag bei etwa 2 bis 4 µm und die der Außendeschichtung bei etwa 6 bis 12 µm.

Je zwei Heizbälge wurden in eine Presse eingebaut. Die Pressen arbeiteten mit heißem Wasser aks Neizmedium (Druck etwa 20 bar; Temperatur etwa 180°C). Produziert wurden die Reifengrößen PKW-Radical 175/14. Die Vulkanisationzeit betrug 12 Minuten. Die herkömmliche Haltbarkeit der verwendeten Heizbälge betrug 500 Heizungen.

Bei den durchgeführten Versuchen wurden die Reifenrohlinge selbstverständlich nicht mit Innentrennmitteln beschichtet. Die Pressen wurden ohne Schwierigkeiten angefahren, und die Heizbälge waren oberflächlig glatt und bekamen nach etwa 20 Heizungen eine gleichmäßige Grauweiß-Färbung. Es gab absolut keine Ausschußreifen.

Balg 1: Nach 350 Heizungen platzte der Balg, weil in der Presse kein Rohling nachgeladen wurde. Es zeigte sich bei den geplatzten Balg, daß weder innen noch außen ein Ablösen der aufgebrachten Beschichtung festzustellen war. Die Haftung der Beschichtung war also optimal und das Platzen hatte nichts mit der Beschichtung zu tun.

Balg 2: Dieser Balg war nach 460 Heizungen zerstört. Die Beschichtung war aber noch ohne Fehler.

Balg 3: Dieser Balg war nach 480 Heizungen zerstört, aber wiederum war die Beschichtung noch gut.

Balg 4: Dieser Balg fiel nach 512 Heizungen ausm aber die Beschichtung war ebenfalls noch ausreichend.

Alle vulkanisierten Reifen waren von bester Qualität. Es gas also keinerlei Ausschuß.

Die Ergebnisse der oben beschriebenen Versuche zeigen, daß es durch das erfindungsgemäße Verfahren möglich ist, Reifen ohne Innensprühlösung und ohme Nachbeschichtung der Heizmembran solange zu produzieren, bis die Heizmembran ausfällt. Zusätzlich war eine Qualitätsverbesserung der Reifen festzustellen (gute Oberfläche, kein Ausschuß). Darüber hinaus verlängerte sich die natürliche Lebensdauer der Heizmenbranen un etwa 20%. Dies ist auf die Innenbeschichtung zurückzuführen. Die Bälge werden nämlich normalweise durch Aswaschung des heißen Wassers von innen heraus brüchig. Durch die Innenbeschichtung wurde die Auswaschwirkung reduziert bzw. verhindert.

**Patentansprüche**

1. Verfahren zur Formung und Vulkanisation von Reifen und anderen Gummiartikeln, bei dem in einer Presse mit Hilfe einer Heizmembran unter hohem Druck Negativformen in den Rohling gedrückt werden und die Vulkanisation bewerkstelligt wird, dadurch gekennzeichnet, daß man die Heizmembran vor Durchführung der Formung und Vulkanisation mit einem vernetzteten, fest haftenden, mit dem Untergrund durch chemische Weschelwirkungen verbundenen, elastischen Trennmittelfilm versieht.

2. Verfahren nach Anspruch 1, bei dem man den Trennmittelfilm auf der Heizmembran herstekkt, indem man

a) eine in organischen Lösungsmitteln gelöste Mischung von Silikontrennmittel und Silikonkautschuk, der unter Einfluß von Feuchtigkeit und/oder Wärme polymerisiert, auf die Heizmembran aufbringt,

b) die so behandelte Heizmembran anschließend Feuchtigkeit enthaltender Luft und/oder Wärme aussetzt und

c) die Verfahrensschritte a) und b) gegebenefalls ein oder mehrere Male wiederholt, so daß der Trennmittelfilm aus mehreren dünnen Schichten besteht.

3. Verfahren nach Anspruch 2, bei dem man eine Lösung aufbringt, die zusätzlich Füllstoff enthält.

4. Verfahren nach einem der Ansprüche 1 bis 3, bei dem man in den Trennmittelfilm oder in eine oder mehere der dünnen Schichten des Trennmittelfilms Gleitmittel einarbeitet und/oder als Deckschicht eine Gleitmittelschicht aufbringt.

5. Verfahren nach Anspruch 4, bei dem man als Deckschicht ein aufziehendes, vernetzendes Silikonharz aufbringt.

6. Verfahren nach einem der Ansprüche 2 bis 5, bei dem man zusätzlich eine reine Trennmittelschicht als Zwischenschicht aufbringt.

7. Verfahren nach einem der Ansprüche 1 bis 6, bei dem man die Heizmembran mit einem Trennmittelfilm versieht, der eine Gersamtschichtdicke von 5 bis 100 µm und vorzugsweise 20 bis 60 µm besitzt.

8. Verfahren nach einem der Ansprüche 1 bis 7, bei dem man auch auf die Innenseite der Heizmembran einen Trennmittelfilm aufbringt.

9. Verfahren nach Anspruch 8, bei dem man den Trennmittelfilm auf der Innenseite der Heizmembran herstellt, indem man nacheinander mehrer dünne Schichten aufbringt.

10. Verfahren nach einem der Ansprüche 2 bis 9, bei dem man auf die Außenseite der Heizmembran 2 bis 10 und vorzugsweise 3 bis 6 und auf der Innenseite 1 bis 5 dünne Schichten mit Schichtstärken von 1 bis 20 µm und vorzugsweise 1 bis 5 µm aufbringt.

11. Verfahren nach Anspruch 10, bei dem man den Trennmittelfilm auf der Außenseite der Heizmembran in einer Gesamtschichtstärke von 2 bis 50 µm und vorzugsweise 5 bis 30 µm und auf der Innenseite der Heizmembran mit einer Gesamtschichtstärke von 1 bis 30 µm und vorzugsweise 2 bis 10 µm aufbringt.

12. Verfahren nach einem der Ansprüche 1 bis 11, bei dem man die Oberfläche der Heizmembran vor Aufbringung des Trennmittelfilms mit einem Lösungsmittel anquillt.

13. Verfahren nach einem der Anspruche 1 bis 12, bei dem man nach Durchführung so vieler Heizungen, daß der Trennmittelfilm auf der Außenseite der Heizmembran beschädigt ist, eine Nachbeschishtung durchführt, indem man einen Reifebrohling oder einen bereits vulkanisierten Werkzeugreifen mit dem zur Herstellung des Trennmittelfilm verwendeten Material beschichtet und dann diesen zur Übertragung des Materials auf die Heizmembran und zur Aushärtung des Materials ganz normal in der Presse behandelt.

14. Verfahren nach Anspruch 13, bei dem man verzögertes oder temperaturbeschleunigtes Material verwendet.

**Revendication**

1. Procédé de formation et de vulcanisation de pneumatiques et autres articles en caoutchouc où, dans une presse, à l'aide d'une membrane chauffante, des formes mégatives sont pressées sous une forte pression dans l'ébauche et la vulcanisation est effectuée, caractérisé en ce que l'on donne, à la membrane, avant accomplissement de la mise en forme et da la vulcanisation, un film d'un agent élastique de démoulage, réticulé, durci, adhérent, et lié à la base par interactions chimiques.

2. Procédé selon la revendication 1, dans lequel on produit le film de l'agent de démoulage sur la membrane chauffante, par le fait que

a) on place un mélange dissous dans un solvant organique d'une agent de démoulage de silicone et d'une caoutchouc de silicone, qui se polymérise sous l'influence de l'humidité et/ou de la chaleur, sur la membran chauffante,

b) la membrane chauffante ainsi traitée est soumise ensuite à de l'air contenant de l'humidité et/ou de la chaleur et

c) les étapes de procédé a) et b) sont, le cas échéant, répétées une ou plusieurs fois de manière que le film de l'agent de mémoulage se compose de plusieurs couches minces.

3. Procédé selon la revendication 2, où l'on amène une solutiuon qui contient de plus une charge.

4. Procédé selon l'une quelconque des revendication 1 à 3, où l'on incorpore, dans le film de l'agent de démoulage ou bien dans une ou plusieurs des couches minces du film de l'agent de démoulage, un lubrifiant et/ou prévoit en tant que couche de recouvrement une couche d'un agent lubrifiant.

5. Procédé selon la revendication 4, où l'on prévoit en tant que couche de recouvrement, une résine de silicone réticulable et étirable.

6. Procédé selon l'une quelconque des revendication 2 à 5, où l'on prévoit de plus une couche d'un agent de démoulage pur en tant que couche intermédiaire.

7. Procédé selon l'une quelconque des revendication 1 à 6, où l'on donne à la membrane chauffante un film d'un agent de démoulage que possède une épaisseur totale de 5 à 100 µm et, avantageusement, de 20 à 60 µm.

8. Procédé selon l'une quelconque des revendication 1 à 7, où l'on prévoit également, a l'intérieur de la membrane chauffante, un film d'un agent de démoulage.

9. Procédé selon la revendication 8, où l'on produit le fim de l'agent de démoulage à l'intérieur de la membrane chauffante par le fait que l'on forme, les unes après les autres, plusieurs couches miches.

10. Procédé selon l'une quelconque des revendication 2 à 9, où l'on forme, sur le côté externe de la membrane chauffante, 2 à 10 et avantageusement 3 à 6 et, sur le côté interne, 1 à 5 couches minces ayant des épaisseurs de couche de 1 à 20 µm et avantageusement de 1 à 5 µm.

11. Procédé selon la revendication 10, où l'on forme le film de l'agent de démoulage, sur le côté externe de la membrane chauffante, à une épaisseur totale de 2 à 50 µm et avantageusement de 5 à 30 µm et, du côté interne de la membrane chauffante, à une épaisseur totale de 1 à 30 µm et avantageusement de 2 à 10 µm.

12. Procédé selon l'une quelconque des revendications 1 à 11, où l'on trempe la surface de la membrane chauffante avant mise en place du film de l'agent de démoulage, au moyen d'un solvant.

13. Procédé selon l'une quelconque des revendications 1 à 12, où après avoir accompli suffisamment de chauffes pour que le film de l'argent de démoulage sur le côté externe de la membrane chauffante soit dégradé, une post-enduction est accomplie où l'on enduit une ébauche de pneumatique ou bien un pneumatique déjà vulcanisé du matériau utilisé pour la production de film de l'agent de démoulage et ensuite on traite celui-ci pour la transmission du matériau sur la membrane chauffante et pour le durcissement de matétiau, de manière tout à fait normale, dans la presse.

14. Procédé selon la revendication 13, où l'on utilise un matériau retardé ou accéléré en température.

**Claims**

1. Process for the moulding and vulcanization of tyres and of other rubber articles, in which a press is used with the assistance of a heating membrane to press female impressions under high pressure into the preform and vulcanization is accomplished, characterized in that, before carrying out the moulding and vulcanization, the heating membrane is coated with across linked, cured, firmly adhering, elastic release agent film which has been bonded to the substrate by chemical interactions.

2. Process according to Claim 1 in which the release agent film is produced on the heating membrane by

a) applying to the heating membrane a mixture, dissolved in organic solvents, of silicone release agent and silicone rubber which polymerizes under the influence of moisture and/or heat,

b) subsequently exposing the heating membrane which has been treated in this manner to moist air and/or heat and

c) repeating the process steps a) and b) optionally one or more times so that the release agent film is composed of a plurality of thin coatings.

3. Process according to Claim 2 in which the solution applied also contains filler.

4. Process according to one of Claims 1 to 3, in which lubricants are incorporated in the release agent film in one or more of the thin coatings of the release agent film and/or the top coating applied is a lubricant coating.

5. Process according to Claim 4, in which the top coating applied is an adhering, crosslinking silicone resin.

6. Process according to one of Claims 2 to 5 in which a pure release agent coating is additionally applied as an intermediate coating.

7. Process according to one of Claims 1 to 6, in which the heating membrane is coated with a release agent film which has an overall coating thickness of 5 to 100 µm and preferably 20 to 60 µm.

8. Process according to one of Claims 1 to 7 in which the heating membrane is also coated on the inside with a release agent film.

9. Process according to Claim 8, in which the heating membrane is coated on the inside with the release agent film by applying a plurality of thin coatings in succession.

10. Process according to one of Claims 2 to 9, in which the heating membrane is coated on the outside with 2 to 10 and preferably 3 to 6, and on the inside with 1 to 5, thin coatings having thicknesses of 1 to 20 µm and preferably 1 to 5 µm.

11. Process according to Claim 10, in which the heating membrane is coated on the outside with the release agent film to an overall coating thickness of 2 to 50 µm and preferably 5 to 30 µm and the heating membrane is coated on the inside with the said film to an overall coating thickness of 1 to 30 µm and preferably 2 to 10 µm.

12. Process according to one of Claims 1 to 11, in which the surface of the heating membrane is swollen with a solvant before applying the release agent film.

13. Process according to one of Claims 1 to 12, in which after carrying out so many heating cycles that the release agent film on the outside of the heating membrane is damaged, a subsequent coating operation is carried out in which a green tyre of an already vilcanized auxiliary tyre is coated with the material used to produce the release agent film and then this tyre is treated quite normally in the press to transfer the material to the heating membrane and to cure the material.

14. Process according to Claim 13, in which an inhibited or heat-accelerated material is used.